# EUROPÄISCHE PATENTSCHRIFT

(11) **EP 1 425 618 B1**
(45) Veröffentlichungstag und Bekanntmachung des Hinweises auf die Patenterteilung: **13.12.2006**
(21) Anmeldenummer: 01978155.8
(22) Anmeldetag: 14.09.2001
(51) Int. Cl.: G02B 6/42

(54) **SENDE- UND/ODER EMPFANGSANORDNUNG ZUR OPTISCHEN SIGNALÜBERTRAGUNG**
TRANSMITTER AND/OR RECEIVER ARRANGEMENT FOR OPTICAL SIGNAL TRANSMISSION
DISPOSITIF EMETTEUR ET/OU RECEPTEUR DESTINE A LA TRANSMISSION OPTIQUE DE SIGNAUX

(43) Veröffentlichungstag der Anmeldung: 09.06.2004
(73) Patentinhaber: Finisar Corporation, Sunnyvale, CA 94089 (US)
(72) Erfinder: KROPP, Jörg-Reinhardt, 12355 Berlin (DE)
(74) Vertreter: Müller, Wolfram Hubertus
(86) Internationale Anmeldenummer: PCT/DE2001/003603
(87) Internationale Veröffentlichungsnummer: WO 2003/027743

(56) Entgegenhaltungen:
- EP-A- 0 127 401
- EP-A- 0 466 975
- EP-A- 0 684 651
- EP-A- 0 889 533
- EP-A- 1 109 041
- WO-A-00/57522
- DE-C- 19 508 222
- DE-U- 29 813 985

## Beschreibung

Die Erfindung betrifft eine Sende- und/oder Empfangsanordnung zur optischen Signalübertragung gemäß dem Oberbegriff des Anspruchs 1.

In der optischen Nachrichtenübertragung werden Sende- und/oder Empfangsanordnungen eingesetzt, um Lichtsignale in einen Wellenleiter einzukoppeln und/oder von einem Wellenleiter empfangene optische Signale zu detektieren. Für Anwendungen in der Datenkommunikation werden sowohl für Multimode-Lichtwellenleiter als auch für Singlemode-Lichtwellenleiter kompakte und kostengünstige Sende- und/oder Empfangsanordnungen benötigt.

Es sind aus der gatttungsgemäßen EP 0 684 651 A2 Sende- und/oder Empfangsanordnungen bekannt, bei denen ein Sende- und/oder Empfangselement hermetisch dicht in einem sogenannten TO-Gehäuse angeordnet ist. TO-Gehäuse sind im Stand der Technik bekannte Standardgehäuse für optische Sende- oder Empfangselemente, deren Form dem Gehäuse eines (klassischen) Transistors ähnelt, die jedoch an der Oberseite ein Glasfenster zum Lichtein- und -austritt aufweisen. Die Signalzuführung erfolgt über Kontaktpins, die nach unten von dem TO-Gehäuse weggeführt sind. Sende- und/oder Empfangsanordnungen zur optischen Signalübertragung mit TO-Gehäuse weisen den Nachteil auf, daß sie nur begrenzt hochfrequenzgeeignet sind. Ihr Einsatz im Frequenzbereich von einigen Gbit/s und mehr ist nur noch bei spezieller individueller Anpassung der Elektronik möglich.

Des weiteren sind im Stand der Technik Sende- und/oder Empfangsanordnungen bekannt, bei denen spezielle, hermetisch dichte Hochfrequenzgehäuse vorgesehen sind, die eine seitliche Durchführung des optischen Wellenleiters oder optischen Strahls erlauben. Derartige Hochfrequenzgehäuse mit seitlicher Durchführung sind sehr aufwendig und teuer.

Ausgehend von diesem Stand der Technik liegt der vorliegenden Erfindung die Aufgabe zugrunde, eine Sende- und/oder Empfangsanordnung zur optischen Signalübertragung zur Verfügung zu stellen, die bei einfachem und kostengünstigen Aufbau auch bei hohen Datenraten oberhalb von 1 Gbit/s eingesetzt werden kann.

Diese Aufgabe wird erfindungsgemäß durch eine Sende- und/oder Empfangsanordnung mit den Merkmalen des Anspruchs 1 gelöst. Vorteilhafte und bevorzugte Ausgestaltungen der Erfindung sind in den Unteransprüchen angegeben.

Danach ist erfindungsgemäß vorgesehen, daß die elektrischen Zuführungen auf einem auf der Basisplatte befestigten Trägerelement angeordnet sind, das sich zumindest teilweise in den Zwischenraum zwischen der Basisplatte und dem Strahlformungselement erstreckt, wobei das Trägerelement mit den elektrischen Leitungszuführungen dicht an das optische Sende- und/oder Empfangselement herangeführt ist und dabei eine seitliche Öffnung teilweise ausfüllt, die der Zwischenraum aufweist. Der Zwischenraum ist dabei durch die Basisplatte, das Strahlformungselement und mindestens eine seitliche Begrenzung begrenzt, die durch das Strahlformungselement oder ein Koppelelement zur Ankopplung eines Wellenleiters gebildet ist. Die seitliche Öffnung ist in einem Bereich des Zwischenraums ausgebildet, in dem der Zwischenraum keine seitliche Begrenzung aufweist.

Es liegt ein nicht hermetisches Packaging verbunden mit einer speziellen Anordnung der notwendigen Komponenten einer Sende- und/oder Empfangsanordnung vor. Unter nicht hermetisch wird dabei verstanden, daß keine durch Löten, Verschweißen, Einglasen etc. herbeigeführte Abkapselung der Sende- und/oder Empfangsanordnung vorliegt.

Der nicht hermetische Aufbau bzw. das Zurverfügungstellen mindestens einer Öffnung des Zwischenraums zwischen der Basisplatte und dem Strahlformungselement erlaubt es, das Trägerelement mit den elektrischen Leitungszuführungen dicht an das optische Sende- und/oder Empfangselement heranzuführen. Dabei füllt das Trägerelement die seitliche Öffnung teilweise aus. Auch besteht durch das Vorhandensein einer seitlichen Öffnung des Zwischenraums zwischen Basisplatte und Strahlformungselement die Möglichkeit, nach Anordnung der einzelnen Komponenten auf der Basisplatte ein Vergußmaterial in den Zwischenraum einzubringen.

Es wird somit eine spezielle Anordnung der notwendigen Komponenten einer Sende- und/oder Empfangsanordnung bereitgestellt. Dabei dient die eine Oberfläche der Basisplatte als Montagefläche für die weiteren Komponenten. Dies erlaubt einen einfacheren, kostengünstigeren Aufbau. Die Ausbildung eines Zwischenraums ermöglicht die geschützte Anordnung von Komponenten auf der Basisplatte nahe an der Sende- und/oder Empfangsanordnung.

In einer bevorzugten Ausgestaltung der Erfindung ist vorgesehen, in den Zwischenraum zwischen der Basisplatte und dem Strahlformungselement zumindest teilweise eine transparente Vergußmasse einzubringen, die den optischen Strahlengang zwischen dem Sende- und/oder Empfangselement und dem Strahlformungselement vollständig ausfüllt. Vorteilhafterweise sind auch das Sende- und/oder Empfangselement und zugehörige Kontaktleitungen von der Vergußmasse vollständig umschlossen, um sie zu schützen. Als Vergußmaterial wird dabei bevorzugt ein weicher Verguß verwendet, etwa eine Silikonmasse, damit keine Kräfte von der Vergußmasse auf das Sende- und/oder Empfangselement ausgeübt werden. Die Vergußmasse dient einem Schutz des Sende- und/oder Empfangselementes sowie des Strahlengangs gegenüber äußeren Einflüssen wie Schmutz und Feuchtigkeit.

In einer bevorzugten Ausgestaltung der Erfindung weist die Basisplatte mechanische Strukturen zur mechanischen und/oder optischen Ausrichtung der darauf angeordneten Elemente auf. Bei den mechanischen Strukturen handelt es sich beispielsweise um Bohrungen in der Basisplatte, um Erhebungen, oder um eine speziell geformte Außenkontur der Basisplatte oder von Teilen der Basisplatte.

Die mechanischen Strukturen der Basisplatte erlauben eine genaue Ausrichtung des Sende- und/oder Empfangselementes auf der Basisplatte. Dies kann über optische Bilderkennungsverfahren erfolgen, wobei die mechanischen Konturen als Markierungen für die Bilderkennung dienen. Bevorzugt sind mindestens zwei solcher Konturen bzw. Markierungen vorgesehen. Statt der Verwendung von Bilderkennungsverfahren zur exakten Positionierung und Justierung des Sende- und/oder Empfangselements 2 kann alternativ vorgesehen sein, daß am Sende- und/oder Empfangselement korrespondierende mechanische Strukturen ausgebildet sind, so daß mittels der korrespondierenden Strukturen eine passive Justierung zwischen Sende- und/oder Empfangselement und der Basisplatte erfolgt.

Des weiteren dienen die mechanischen Strukturen der Basisplatte einer Ausrichtung und Befestigung des Strahlformungselementes. So weist das Strahlformungselement auf der der Basisplatte zugewandten Seite bevorzugt mechanische Strukturen auf, die der optischen und/oder mechanischen Ausrichtung des Strahlformungselementes beim Aufsetzen auf die Basisplatte dienen. Beispielsweise weist das Strahlformungselement Vorsprünge auf, die in entsprechende Bohrungen der Basisplatte eingreifen, wodurch das Strahlformungselement auf der Basisplatte gleichzeitig befestigt und justiert wird. Eine zusätzliche Befestigung durch Kleber etc. ist natürlich möglich und gegebenenfalls sinnvoll.

Bevorzugt weist das mit der Basisplatte verbundene Strahlformungselement auf der der Basisplatte zugewandten Seite eine Aushöhlung auf, die den Zwischenraum zwischen der Basisplatte und dem Strahlformungselement bildet und die die mindestens eine seitliche Begrenzung des Zwischenraums bereitstellt. Das Strahlformungselement stellt dabei eine Art schützende Umhüllung des Sende- und/oder Empfangselementes dar.

Bevorzugt ist neben einer seitlichen Öffnung des Zwischenraums mindestens eine weitere Öffnung vorhanden, die beispielsweise durch eine Bohrung in der Basisplatte oder in dem Strahlformungselement gebildet wird. Eine solche weitere Öffnung stellt eine Entlüftungsöffnung beim Einfüllen einer Vergußmasse in den Zwischenraum dar und erleichtert das Befüllen des Zwischenraums mit Vergußmasse.

Es wird darauf hingewiesen, daß die seitliche Öffnung bevorzugt nicht verschlossen wird, da sie der Kompensation temperaturbedingter Ausdehnungsvariationen des transparenten Vergußmaterials dient.

In einer bevorzugten Weiterbildung der Erfindung handelt es sich bei dem Trägerelement mit den elektrischen Leitungszuführungen um eine Keramik, insbesondere ein Keramikplättchen aus nicht leitendem Material, auf dessen Oberseite die Leitungszuführungen ausgebildet sind. Die Leitungszuführungen sind dabei bevorzugt in hochfrequenztauglicher Technik, etwa als Streifenleiter ausgebildet. Entsprechende Keramikteile lassen sich mit hoher Präzision und geringen Schwankungen in ihren HF-Eigenschaften herstellen. Es können durch Verwendung einer Keramik als Träger der elektrischen Leitungszuführungen daher Leiterbahnen mit genau definierten konstanten und reproduzierbaren Hochfrequenzeigenschaften bereitgestellt werden.

In einer Weiterbildung der Erfindung weist das Strahlformungselement an seiner der Basisplatte abgewandten Seite Konturen zur Ankopplung eines Lichtwellenleiters auf. Alternativ sind derartige Konturen nicht an dem Strahlformungselement, sondern an einem gesonderten Koppelelement ausgebildet, das als gesondertes Teil mit der Basisplatte verbunden ist. Das Kopplungselement weist dabei ebenfalls eine seitliche Öffnung auf, um den Zwischenraum zwischen Basisplatte und Strahlformungselement nicht zu verschließen. Es sind dabei zahlreiche Ausbildungen und Verbindungen von Strahlformungselement und zusätzlichem Koppelelement denkbar. Beispielsweise kann das Strahlformungselement statt an der Basisplatte an dem zusätzlichen Koppelelement befestigt sein, wobei dann natürlich letzteres mit der Basisplatte verbunden ist und die seitliche Begrenzung des Zwischenraums ausbildet.

Es liegt im Rahmen der Erfindung, weitere elektronische oder opto-elektronische Bauelemente in dem Zwischenraum zwischen der Basisplatte und dem Strahlformungselement anzuordnen. Beispielsweise kann eine Monitordiode unter oder neben dem Sende- und/oder Empfangselement angeordnet sein. Sofern sich eine Monitordiode neben dem Sende- und/oder Empfangselement befindet, ist in einer speziellen Ausgestaltung der Erfindung vorgesehen, die Grenzfläche des Strahlformungselementes zu dem Zwischenraum zumindest in einem Bereich schräg verlaufend auszubilden, so daß ein Teil der vom Sendeelement ausgesandten Strahlung an der schräg verlaufenden Grenzfläche zurückreflektiert und damit auf die neben dem Sendeelement angeordnete Monitordiode geleitet wird.

Durch die Schrägstellung wird auch verhindert, daß von dem Sendeelement ausgesandte Strahlung auf das Sendeelement zurückgeführt wird.

Zur Erhöhung der reflektierten Strahlung kann vorgesehen sein, auf den schräg verlaufenden Bereich der Grenzfläche eine teildurchlässige bzw. teilreflektierende Spiegelschicht aufzubringen.

Bei der Basisplatte handelt es sich bevorzugt um einen Leadframe oder einen Teil eines Leadframes, was den Vorteil einer einfachen und kostengünstigen Herstellung unter Verwendung von Standardverfahren mit sich bringt. Auf dem Leadframe werden in der beschriebenen Weise die einzelnen Komponenten der Sende- und/oder Empfangsanordnung befestigt bzw. ausgerichtet. Alternativ besteht die Basisplatte aus einem ebenen Substrat, beispielsweise einem SiliziumSubstrat.

Die Erfindung wird nachfolgend unter Bezugnahme auf die Figuren der Zeichnung anhand mehrerer Ausführungsbeispiele näher erläutert. Es zeigen:
- Figur 1 -: schematisch ein erstes Ausführungsbeispiel einer Sende- und/oder Empfangsanordnung in Schnittansicht;
- Figur 2 -: schematisch ein zweites Ausführungsbeispiel einer Sende- und/oder Empfangsanordnung, bei der das Strahlformungselement Konturen zur Aufnahme eines Lichtwellenleiters ausbildet;
- Figur 3 -: schematisch ein drittes Ausführungsbeispiel einer Sende- und/oder Empfangsanordnung, bei der ein zusätzliches Kopplungselement zur Ankopplung eines Lichtwellenleiters vorgesehen ist;
- Figur 4 -: schematisch ein viertes Ausführungsbeispiel einer Sende- und/oder Empfangseinrichtung;
- Figur 5 -: schematisch ein fünftes Ausführungsbeispiel einer Sende- und/oder Empfangseinrichtung und
- Figur 6 -: schematisch ein sechstes Ausführungsbeispiel einer Sende- und/oder Empfangseinrichtung, bei dem das Strahlformungselement eine schräg verlaufende Grenzfläche ausbildet.

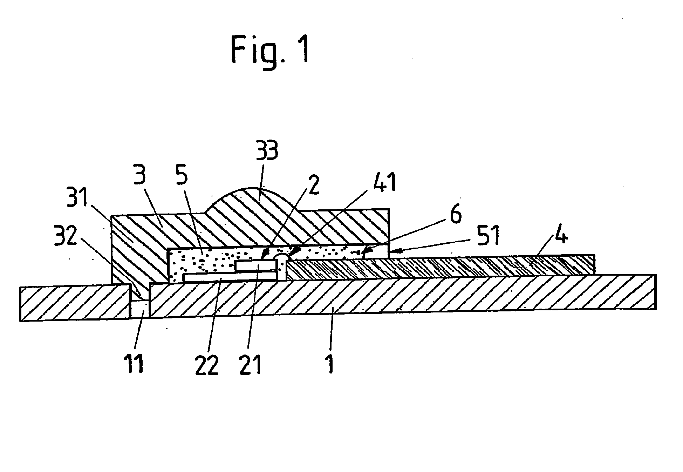

Gemäß Figur 1 besteht die Sende- und/oder Empfangseinrichtung aus einer Basisplatte 1, einem optischen Chip 2 als Sende- und/oder Empfangselement, einem Strahlformungselement 3 und einem Trägerelement 4 für elektrische Leitungszuführungen.

Bei der Basisplatte 1 handelt es sich bevorzugt um ein Leadframe oder ein Teil eines Leadframes, dessen Oberfläche als Montagefläche für die weiteren Komponenten dient. Der optische Chip 2 ist unmittelbar auf der Basisplatte 1 bzw. dem Leadframe angeordnet. Er besteht im dargestellten Ausführungsbeispiel aus einem optischen Sendeelement 21, beispielsweise einer Laserdiode oder eine Leuchtdiode und einem optischen Empfangselement 22, beispielsweise einer Fotodiode, die übereinander in Chip-on-Chip Montage angeordnet sind. Alternativ sind lediglich ein Sendeelement 21 oder lediglich ein Empfangselement 22 vorgesehen.

Auch wird darauf hingewiesen, daß das Sendeelement 21 nicht oberhalb des Empfangselementes 22 angeordnet sein muß. So können das Sendeelement und das Empfangselement ebenso nebeneinander auf der Basisplatte 1 angeordnet sein.

Die elektrische Kontaktierung des optischen Chips 2 erfolgt über auf dem Trägerelement 4 angeordnete Leitungszuführungen. Dabei wird der Träger 4, der ebenfalls unmittelbar auf der Basisplatte 1 befestigt ist, bis dicht an den optischen Chip 2 herangeführt. Wie angedeutet, erfolgt eine elektrische Verbindung zwischen den Leitungszuführungen des Trägerelements 4 und dem optischen Chip über Drähte oder Bändchen 41. Die Leitungsführungen des Trägerelement wiederum werden über die Basisplatte (nicht dargestellt) oder eine weitere elektrische Komonente kontaktiert.

Das Trägerelement 4 ist bevorzugt ein Keramikplättchen, auf dem Leitungszuführungen hochfrequenztauglich ausgebildet sind. Beispielsweise handelt es sich bei den Leiterzuführungen um Streifenleiter. Das aus einer Keramik bestehende Trägerelement 4 mit auf der Oberseite angeordneten Leitungszuführungen stellt konstante Hochfrequenzeigenschaften auch bei hohen Frequenzen zur Verfügung, wie sie auf dem Basisteil 1 selbst jedenfalls im Fall der Ausbildung als Leadframe nicht bereitgestellt werden könnten.

Auch können die Kantenflächen des optischen Chips 2 und des Trägerelements 4 mit den Leitungszuführungen wie dargestellt die gleiche Höhe aufweisen. Durch die dann in gleicher Höhe befindlichen Kontaktflächen von Chip 2 und Trägerlement 4 ist es möglich, besonders kurze Bonddrähte oder Bändchen einzusetzen, wodurch die Hochfrequenzeigenschaften verbessert werden.

Das Strahlformungselement 3 ist über mindestens eine senkrechte verlaufende Wand 31 mit der Basisplatte 1 verbunden. Hierzu weist die Basisplatte eine Bohrung 11 auf, in die ein Vorsprung 32 des Strahlformungselements 3 eingreift. Bevorzugt sind am Umfang des Strahlformungselementes mehrere derartige Vorsprünge 32 vorgesehen, die in entsprechende Bohrungen 11 der Basisplatte eingreifen. Die Wand 31 sind bevorzugt bis auf eine noch zu erläuternde Öffnung umlaufend ausgebildet, so daß das Strahlformungselement 3 eine Aushöhlung ausbildet. Diese Aushöhlung stellt einen Zwischenraum 5 zwischen der Basisplatte 1 und dem Strahlformungselement 3 dar. Der Zwischenraum besitzt eine seitliche Öffnung 51, so daß es sich bei der Sende- und/oder Empfangsanordnung nicht um eine hermetisch abgeschlossene Anordnung handelt. Die Öffnung 51 des Zwischenraumes 5 ermöglicht zum einen das Einbringen des Trägerelementes 4 in den Zwischenraum 5 bis nahe an den optischen Chip 2. Des weiteren ermöglicht die Öffnung 51 des Zwischenraumes 5, den Zwischenraum 5 mit einer transparenten Vergußmasse 6 zu vergießen und dabei insbesondere den optischen Chip 2 mit der Vergußmasse 6 zu umhüllen. Bei der Vergußmasse handelt es sich bevorzugt um eine weiche Vergußmasse, beispielsweise aus Silikon. Die Vergußmasse ist relativ weich ausgebildet, damit sie keine unerwünschten Kräfte auf den optischen Chip 2 ausübt. Sie schützt den optischen Chip 2 vor äußeren Einflüssen und stellt sicher, daß sie in den Strahlengang zwischen dem optischen Chip und dem Strahlformungselement keine Schmutzpartikel, Feuchtigkeit oder ähnliches geraten.

Es ist sinnvoll, daß die Öffnung 51 des Zwischenraums 5 zwischen der Basisplatte 1 und dem Strahlformungselement 3 auch nach Positionieren des Trägerelementes 4 und Einbringen der Vergußmasse 5 geöffnet bleibt und nicht etwa verschlossen wird, um bei Temperaturänderungen einen Ausgleich für Volumenänderungen der Vergußmasse bereitzustellen, die aufgrund eines sich mit der Temperatur ändernden Ausdehnungskoeffizienten erfolgen.

Das Strahlformungselement 3 bildet oberhalb des optischen Chips 2 eine Linse 33 aus, die vom optischen Chip 2 ausgesandtes Licht auf die Stirnfläche eines Lichtwellenleiters fokussiert bzw. aus der Stirnfläche eines Lichtwellenleiters austretendes Licht auf den optischen Chip fokussiert, wie anhand der nachfolgenden Figuren noch erläutert werden wird.

Es wird darauf hingewiesen, daß die Bohrung 11 eine mechanische Struktur darstellt, die neben der Befestigung des Strahlformungselementes 3 auch der optischen Ausrichtung der weiteren Elemente, insbesondere des optischen Chips 2 dient. Dabei sind bevorzugt eine Vielzahl von Bohrungen 11 vorgesehen, die definierte Markierungen darstellen, die von einem Bilderkennungssystem zur Plazierung des optischen Chips 2 auf der Basisplatte erkannt, mit einem internen Koordinatensystem verglichen und dahingehend ausgewertet werden, daß der optische Chip 2 exakt in der gewünschten Position auf der Basisplatte 1 angeordnet wird. Statt Bohrungen 11 können als Markierungen auch Vorsprünge bzw. Erhebungen auf der Basisplatte verwendet werden. Auch kann die äußere Form der Basisplatte eine Markierung darstellen, die der mechanischen und/oder optischen Ausrichtung der Elemente der Sende- und/oder Empfangseinrichtung dient.

Es wird weiter darauf hingewiesen, daß die Justage des optischen Chips 2 auf der Basisplatte 1 statt mittels einer optischen Bilderkennung unter Verwendung der erläuterten Markierungen 11 auch dadurch erfolgen kann, daß an dem optischen Chip Strukturen ausgebildet sind, die mit entsprechenden Strukturen auf der Basisplatte korrespondieren und dementsprechend eine passive Ausrichtung bzw. Justage des optischen Chips 2 auf der Basisplatte 1 ermöglichen. In beiden Fällen ist keine aktive Justage des optischen Chips 2 erforderlich.

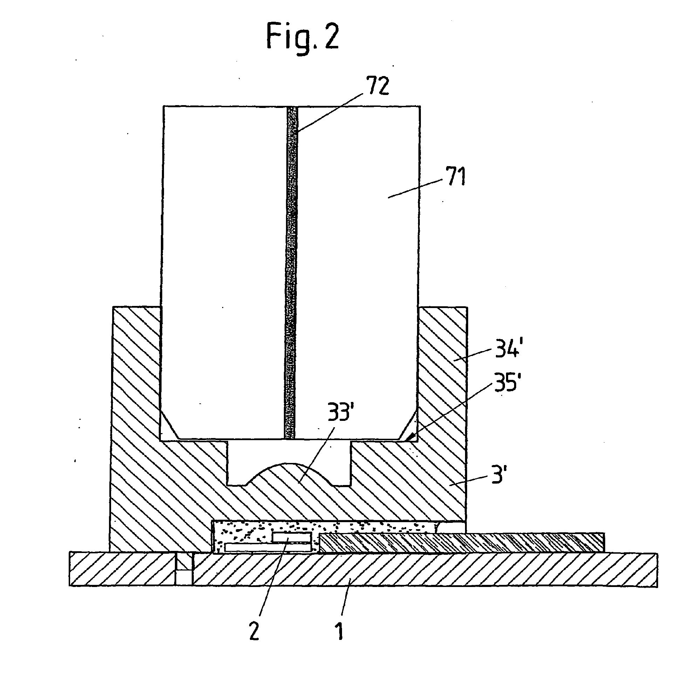

Figur 2 zeigt ein alternatives Ausführungsbeispiel der Erfindung, bei der das Strahlformungselement 3" auf der der Basisplatte 1 abgewandten Seite zusätzlich Konturen 34` ausbildet, mittels derer ein Führungselement 71 für einen Lichtwellenleiter 72 an die Sende- und Empfangsanordnung angekoppelt werden kann. Bei dem Führungselement 71 handelt es sich beispielsweise um eine Ferrule, die in einer zentralen Bohrung den Lichtwellenleiter 72 enthält. Im dargestellten Ausführungsbeispiel handelt es sich bei den Konturen 34' um einen zylindrischen Rand mit einem innenliegenden Absatz 35', die das Führungselement 71 aufnehmen. Über die Linse 33' des Strahlformungselementes erfolgt eine Kopplung zwischen dem Lichtwellenleiter 72 und dem optischen Chip 2.

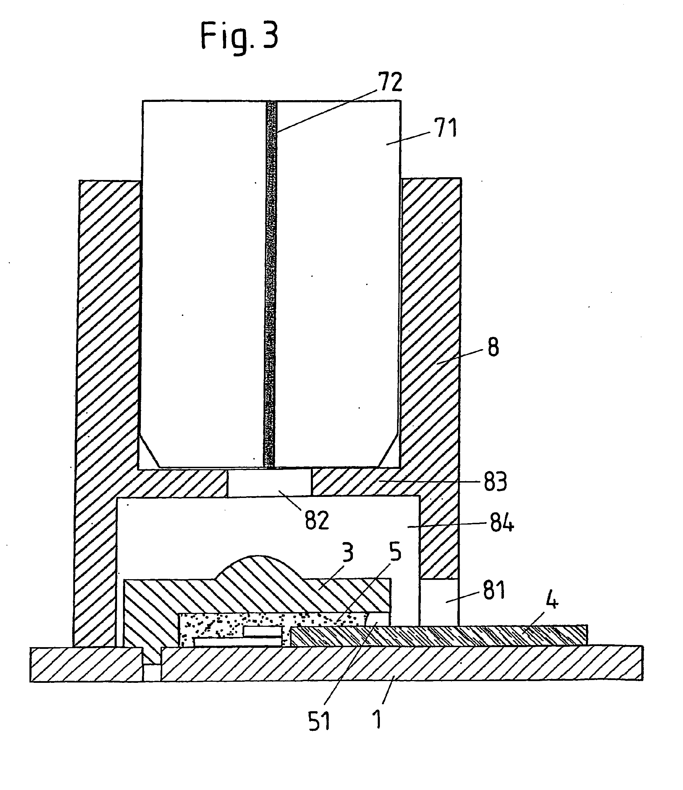

Bei dem Ausführungsbeispiel der Figur 3 ist ein gesondertes Koppelelement 8 vorgesehen, das der Aufnahme des Führungselementes 71 mit dem Lichtwellenleiter 72 dient. Das Koppelelement 8 ist auf der Basisplatte 2 befestigt, beispielsweise über vorgefertigte, korrespondierende Strukturen an der Unterseite des Koppelelementes 8 und der Montagefläche der Basisplatte 1. Wenn die Basisplatte und das Koppelelement aus Metall bestehen, kann nach einer Justage eine Befestigung auch durch eine Materialverbindung, zum Beispiel Laserschweißen erfolgen.

Das Koppelelement 8 weist eine seitliche Öffnung 81 auf, die mit der seitlichen Öffnung 51 des Zwischenraums 5 zwischen Basisplatte 1 und Strahlformungselement 3 fluchtet. Das Trägerelement 4 der elektrischen Leitungszuführungen und die Vergußmasse 9 werden somit über die Öffnungen 81, 51 im Koppelelement 8 und zwischen Basisplatte 1 und Strahlformungselement 3 eingebracht.

Das Koppelelement 8 weist in an sich bekannter Weise eine mit einem Fenster 82 versehene Auflagefläche 83 für einen anzukoppelnden Lichtwellenleiter 71, 72 auf. Es bildet unterhalb der Auflagefläche 83 einen Hohlraum 84 aus, in dem sich das Strahlformungselement 3 befindet.

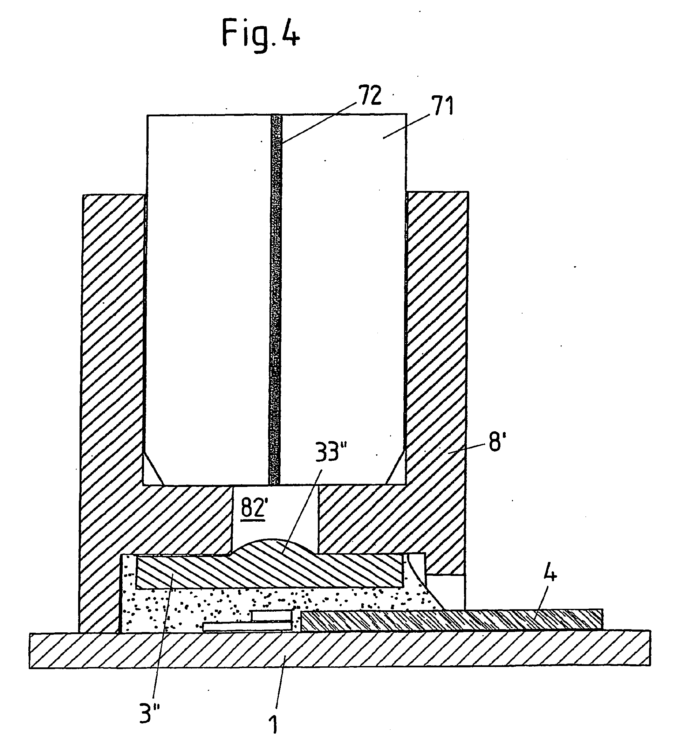

In dem Ausführungsbeispiel der Figur 4 ist das Strahlformungselement 3" nicht an der Basisplatte 1 befestigt, sondern an der Unterseite eines Koppelelementes 8' entsprechend dem Koppelelement 8 der Figur 3. Zur Positionierung des Strahlformungselementes 3" gegenüber dem Koppelelement 8' ragt die Linse 33" des Koppelelements 3" in eine Öffnung 82' des Koppelelements 8' hinein. Am gegenüberliegenden Ende der Öffnung 82' befinden sich die Stirnflächen des Führungselementes 71 und der optischen Faser 72.

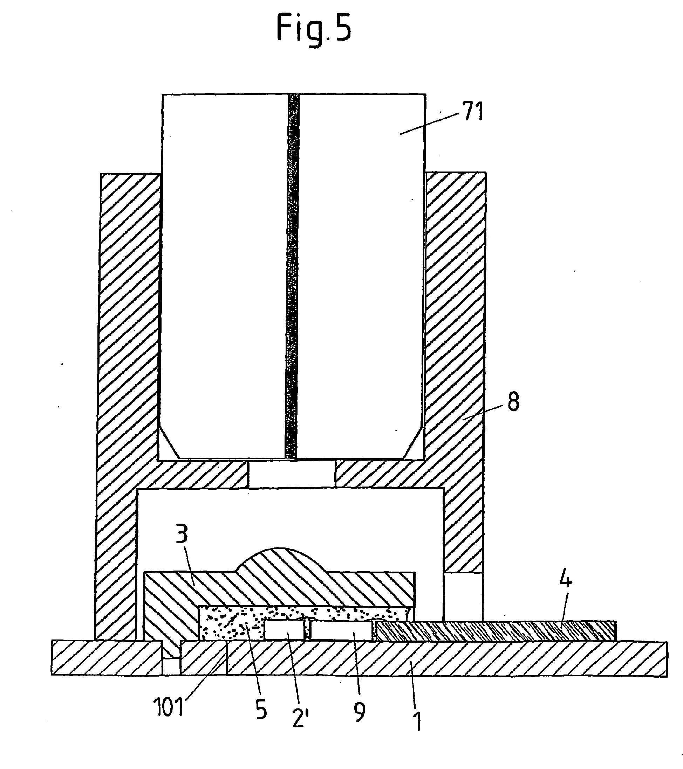

Figur 5 zeigt ein Ausführungsbeispiel einer Sende- und/oder Empfangsanordnung, bei dem auf der Basisplatte 1 neben einem optischen Chip 2' zum Empfangen von optischen Signalen (Empfängerchip) ein Verstärkerchip 9 montiert ist. Sowohl der Verstärkerchip 9 als auch der Empfängerchip 2' werden mittels der elektrischen Leitungszuführungen des Trägerelementes 4 und schematisch dargestellten Bonddrähten kontaktiert. Auch liegen beide innerhalb des Zwischenraumes 5 zwischen Basisplatte 1 und Strahlformungselement 3.

In Figur 5 ist des weiteren eine zusätzliche Bohrung 101 in der Basisplatte 1 dargestellt, die eine Entlüftungsöffnung bereitstellt und insbesondere beim Befüllen des Zwischenraums 5 mit Vergußmasse von Bedeutung ist. Im übrigen entspricht der Aufbau dem Aufbau der Figur 3.

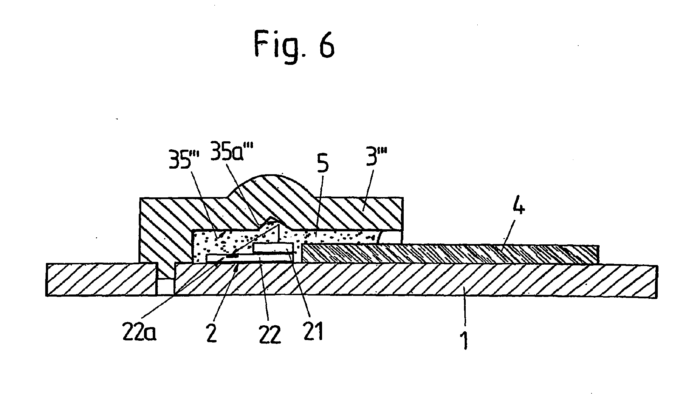

Die Figur 6 zeigt ein alternatives Ausführungsbeispiel, das bis auf das Merkmal dem Ausführungsbeispiel der Figur 1 entspricht, daß die der Basisplatte 1 bzw. dem Zwischenraum 5 zugewandte Grenzfläche 35"' des Strahlformungselementes 3'" in einem Teilbereich nicht parallel zur Basisplatte 1 verläuft, sondern winklig und dabei schräge Fläche 35a"' ausbildet. Dies führt dazu, daß vom optischen Chip 2 ausgesandtes Licht teilweise an der Grenzfläche zwischen dem mit der Vergußmasse gefüllten Zwischenraum 5 und dem Strahlformungselement 3"' reflektiert wird und seitlich neben dem Sendeelement 21 auf das Empfangselement 22 fällt, dessen optisch aktive Fläche 22a bei diesem Ausführungsbeispiel neben dem Sendeelement 21 liegt. Um den Anteil des reflektierten Lichts zu erhöhen kann auch vorgesehen sein, eine Teilverspiegelung an der schrägen Fläche 35a"' vorzusehen.

Das Empfangselement 22 ist dabei eine Monitordiode, die das von dem Sendeelement 21 ausgesandte Licht teilweise detektiert und einem Überwachungsregelkreis zur Regelung der optischen Leistung des Sendeelements zuführt.

Bei Ausbildung des Sendeelementes 21 als VCSEL-Laserdiode, die moduliertes Laserlicht senkrecht nach oben aussendet, befindet sich die Monitordiode in einer alternativen Variante direkt unterhalb der Sendediode, wobei an der Rückfläche des Laserresonators ein geringer Lichtanteil nach unten und auf die Monitordiode ausgekoppelt wird.

## Patentansprüche

1. Sende- und/oder Empfangsanordnung zur optischen Signalübertragung mit
- einem optischen Sende- und/oder Empfangselement (2).
- einer Basisplatte (1), auf der das Sende- und/oder Empfangselement (2) angeordnet ist,
- elektrischen Leitungszuführungen für die Sende- und/oder Empfangsanordnung, und
- einem Strahlformungselement (3), das von einem mit der Sende- und/oder Empfangsanordnung gekoppeltem Wellenleiter ausgesandtes Licht auf das Sende- und/oder Empfangselement (2) leitet bzw. von dem Sende- und/oder Empfangselement (2) ausgesandtes Licht in den Wellenleiter einkoppelt,
wobei
- die Basisplatte (1), das Sende- und/oder Empfangselement (2) und das Strahlformungselement (3) derart übereinander angeordnet sind, daß zwischen der Basisplatte (1) und dem Strahlformungselement (3) ein Zwischenraum (5) vorliegt, in dem sich das Sende- und/oder Empfangselement (2) befindet, und
- die elektrischen Zuführungen auf einem auf der Basisplatte (1) befestigten Trägerelement (4) angeordnet sind, das sich zumindest teilweise in den Zwischenraum (5) erstreckt,
**dadurch gekennzeichnet,dass**
- der Zwischenraum (5) durch die Basisplatte (1), das Strahlformungselement (3) und mindestens eine seitliche Wand begrenzt ist, die durch das Strahlformungselement (3) oder ein Koppelelement (8) zur Ankopplung eines Wellenleiters gebildet ist, und durch die das Strahlformungselement (3) oder das Koppelelement (8) mit der Basisplatte (1) verbunden ist, und
- das Trägerelement (4) mit den elektrischen Leitungszuführungen dicht an das optische Sende- und/oder Empfangselement (2) herangeführt ist und dabei eine seitliche Öffnung teilweise ausfüllt, die der Zwischenraum (5) aufweist.

2. Sende- und/oder Empfangsanordnung nach Anspruch 1, **dadurch gekennzeichnet, daß** der Zwischenraum (5) zumindest teilweise von einen transparenten Vergußmaterial (6) gefüllt ist, das den optischen Strahlengang zum bzw. vom Sende- und/oder Empfangselement vollständig ausfüllt.

3. Sende- und/oder Empfangsanordnung nach Anspruch 1 oder 2, **dadurch gekennzeichnet, daß** die Basisplatte (1) mechanische Strukturen (11) zur mechanischen und/oder optischen Ausrichtung der darauf angeordneten Elemente aufweist.

4. Sende- und/oder Empfangsanordnung nach Anspruch 3, **dadurch gekennzeichnet, daß** das Sende- und/oder Empfangselement (2) relativ zu den mechanischen Strukturen (11) der Basisplatte (1) ausgerichtet ist.

5. Sende- und/oder Empfangsanordnung nach Anspruch 3 oder 4, **dadurch gekennzeichnet , daß** das Strahlformungselement (3) auf der der Basisplatte (1) zugewandten Seite mechanische Strukturen (32) aufweist, die mit den mechanischen Strukturen (11) der Basisplatte korrespondieren und über diese mechanischen Strukturen auf der Basisplatte befestigt ist.

6. Sende- und/oder Empfangsanordnung nach Anspruch 5, **dadurch gekennzeichnet, daß** das Strahlformungselement (3) auf der der Basisplatte zugewandten Seite eine Aushöhlung aufweist, die den Zwischenraum (5) zwischen der Basisplatte (1) und dem Strahlformungselement bildet und die mindestens eine seitliche Begrenzung des Zwischenraums (5) bereitstellt.

7. Sende- und/oder Empfangsanordnung nach mindestens einem der vorangehenden Ansprüche, **dadurch gekennzeichnet, daß** neben einer ersten Öffnung (51) des Zwischenraums (5) mindestens eine weitere Öffnung (101) vorhanden ist, die insbesondere durch eine Bohrung in der Basisplatte (1) oder in dem Strahlformungselement (3) gebildet ist.

8. Sende- und/oder Empfangsanordnung nach nach mindestens einem der vorangehenden Ansprüche, **dadurch gekennzeichnet, daß** das Trägerelement (4) ein Keramikteil ist, auf dessen Oberseite die Leitungszuführungen ausgebildet sind.

9. Sende- und/oder Empfangsanordnung nach mindestens einem der vorangehenden Ansprüche, **dadurch gekennzeichnet, daß** das Strahlformungselement (3') auf der der Basisplatte (1) abgewandten Seite Konturen (34') zur Ankopplung eines Lichtwellenleiters (71, 72) ausbildet.

10. Sende- und/oder Empfangsanordnung nach mindestens einem der Ansprüche 1 bis 9, **gekennzeichnet durch** ein Koppelelement (8, 8') zur Ankopplung eines Lichtwellenleiters, das mit der Basisplatte (1) verbunden ist, wobei das Koppelelement (8, 8') mindestens eine seitliche Öffnung (81) aufweist.

11. Sende- und/oder Empfangsanordnung nach Anspruch 10, **dadurch gekennzeichnet, daß** das Koppelelement (8, 8') auf der der Basisplatte (1) zugewandten Seite eine Aushöhlung (84) aufweist, in der das Strahlformungselement (3) angeordnet ist.

12. Sende- und/oder Empfangsanordnung nach Anspruch 11, **dadurch gekennzeichnet,daß**das Strahlformungselement (3") an dem mit der Basisplatte (1) verbundenen Koppelelement (8') befestigt ist.

13. Sende- und/oder Empfangsanordnung nach mindestens einem der vorangehenden Ansprüche, **dadurch gekennzeichnet, daß** im Zwischenraum (5) zwischen der Basisplatte (1) und dem Strahlformungselement (3) weitere elektronische und/oder opto-elektronische Bauelemente (9) angeordnet sind.

14. Sende- und/oder Empfangsanordnung nach Anspruch 13, wobei das Sende- und/oder Empfangselement ein Sendeelement ist, **dadurch gekennzeichnet , daß** unterhalb des Sendeelementes (21) eine Monitordiode (22) angeordnet ist.

15. Sende- und/oder Empfangselement nach Anspruch 13, wobei das Sende- und/oder Empfangselement ein Sendeelement ist, **dadurch gekennzeichnet , daß** innerhalb des Zwischenraumes (5) und neben dem Sendeelement (21) eine Monitordiode (22) angeordnet ist.

16. Sende- und/oder Empfangsanordnung nach Anspruch 15, **dadurch gekennzeichnet, daß** das Strahlformungselement (3''') an der Grenzfläche (35"') zu dem Zwischenraum (5) einen schräg verlaufenden Bereich (35a"') ausbildet, so daß ein Teil der vom Sendeelement (21) ausgesandten Strahlung auf die neben dem Sendeelement (22) angeordnete Monitordiode zurückreflektiert wird.

17. Sende- und/oder Empfangsanordnung nach Anspruch 16, **dadurch gekennzeichnet, daß** auf den schräg verlaufenden Bereich (35a"') eine teilreflektierende Spiegelschicht aufgebracht ist.

18. Sende- und/oder Empfangselement nach mindestens einem der vorangehenden Ansprüche, **dadurch gekennzeichnet, daß** die Basisplatte (1) ein Leadframe oder ein Teil eines Leadframes ist.

19. Sende- und/oder Empfangselement nach Anspruch 11 oder 12, **dadurch gekennzeichnet, daß** das Koppelelement (8') die mindestens eine seitliche Begrenzung ausbildet, wobei die seitliche Öffnung des Zwischenraums durch die seitliche Öffnung des Koppelelements (8') gebildet ist.

## Claims

1. Transmitting and/or receiving arrangement for optical signal transmission with
- an optical transmitting and/or receiving element (2),
- a base plate (1), on which the transmitting and/or receiving element (2) is arranged,
- electrical line feeds for the transmitting and/or receiving arrangement, and
- a beam-shaping element (3), which directs light emitted by an optical waveguide coupled to the transmitting and/or receiving arrangement onto the transmitting and/or receiving element (2) and couples light emitted by the transmitting and/or receiving element (2) into the optical waveguide,
in which
- the base plate (1), the transmitting and/or receiving element (2) and the beam-shaping element (3) are arranged one above the other in such a way that between the base plate (1) and the beam-shaping element (3) there is an intermediate space (5), in which the transmitting and/or receiving element (2) is located, and
- the electrical feeds are arranged on a carrier element (2), which is fastened on the base plate (1) and extends at least partly into the intermediate space (5),
**characterized in that**
- the intermediate space (5) is bounded by the base plate (1), the beam-shaping element (3) and at least one lateral wall, which is formed by the beam-shaping element (3) or a coupling element (8) for coupling a waveguide and by which the beam-shaping element (3) or the coupling element (8) is connected to the base plate (1) and
- the carrier element (4) with the electrical line feeds is brought right up close to the optical transmitting and/or receiving element (2) and thereby partly fills a lateral opening which the intermediate space (5) has.

2. Transmitting and/or receiving arrangement according to Claim 1, **characterized in that** the intermediate space (5) is at least partly filled by a transparent casting material (6), which fills the optical beam path to and from the transmitting and/or receiving element.

3. Transmitting and/or receiving arrangement according to Claim 1 or 2, **characterized in that** the base plate (1) has mechanical structures (11) for the mechanical and/or optical alignment of the elements arranged on it.

4. Transmitting and/or receiving arrangement according to Claim 3, **characterized in that** the transmitting and/or receiving element (2) is aligned relative to the mechanical structures (11) of the base plate (1).

5. Transmitting and/or receiving arrangement according to Claim 3 or 4, **characterized in that** the beam-shaping element (3) has on the side facing the base plate (1) mechanical structures (32) which correspond to the mechanical structures (11) of the base plate and are fastened on the base plate by means of these mechanical structures.

6. Transmitting and/or receiving arrangement according to Claim 5, **characterized in that** the beam-shaping element (3) has on the side facing the base plate a recess which forms the intermediate space (5) between the base plate (1) and the beam-shaping element and which provides at least one lateral boundary of the intermediate space (5).

7. Transmitting and/or receiving arrangement according to at least one of the preceding claims, **characterized in that**, apart from a first opening (51) of the intermediate space (5), there is at least one further opening (101), which is formed in particular by a drilled hole in the base plate (1) or in the beam-shaping element (3).

8. Transmitting and/or receiving arrangement according to at least one of the preceding claims, **characterized in that** the carrier element (4) is a ceramic part, on the upper side of which the line feeds are formed.

9. Transmitting and/or receiving arrangement according to at least one of the preceding claims, **characterized in that** the beam-shaping element (3') forms on the side facing away from the base plate (1) contours (34') for the coupling on of an optical waveguide (71, 72).

10. Transmitting and/or receiving arrangement according to at least one of Claims 1 to 9, **characterized by** a coupling element (8, 8') for the coupling on of an optical waveguide which is connected to the base plate (1), the coupling element (8, 8') likewise having at least one lateral opening (81).

11. Transmitting and/or receiving arrangement according to Claim 10, **characterized in that** the coupling element (8, 8') has on the side facing the base plate (1) a recess (84), in which the beam-shaping element (3) is arranged.

12. Transmitting and/or receiving arrangement according to Claim 11, **characterized in that** the beam-shaping element (3") is fastened to the coupling element (8') connected to the base plate (1).

13. Transmitting and/or receiving arrangement according to at least one of the preceding claims, **characterized in that** further electronic and/or optoelectronic components (9) are arranged in the intermediate space (5) between the base plate (1) and the beam-shaping element (3).

14. Transmitting and/or receiving arrangement according to Claim 13, the transmitting and/or receiving element being a transmitting element, **characterized in that** a monitor diode (22) is arranged under the transmitting element (21).

15. Transmitting and/or receiving arrangement according to Claim 13, the transmitting and/or receiving element being a transmitting element, **characterized in that** a monitor diode (22) is arranged within the intermediate space (5) and alongside the transmitting element (21).

16. Transmitting and/or receiving arrangement according to Claim 15, **characterized in that** the beam-shaping element (3''') forms at the interface (35''') with the intermediate space (5) a slanting region (35a'''), so that part of the radiation emitted by the transmitting element (21) is reflected back onto the monitor diode arranged alongside the transmitting element (21).

17. Transmitting and/or receiving arrangement according to Claim 16, **characterized in that** a partly reflective film is applied to the slanting region (35a"').

18. Transmitting and/or receiving arrangement according to at least one of the preceding claims, **characterized in that** the base plate (1) is a leadframe or part of a leadframe.

19. Transmitting and/or receiving arrangement according to Claim 11 or 12, **characterized in that** the coupling element (8') forms the at least one lateral boundary, the lateral opening of the intermediate space being formed by the lateral opening of the coupling element (8').

## Revendications

1. Dispositif émetteur et/ou récepteur destiné à la transmission optique de signaux avec
- un élément optique émetteur et/ou récepteur (2),
- une plaque de base (1), sur laquelle est disposé l'élément émetteur et/ou récepteur (2),
- des entrées de lignes électriques pour le dispositif émetteur et/ou récepteur, et
- un élément de formation de faisceau (3), qui guide sur l'élément émetteur et/ou récepteur (2) de la lumière émise à partir d'un guide d'ondes couplé au dispositif émetteur et/ou récepteur ou bien injecte dans le guide d'ondes de la lumière émise à partir de l'élément émetteur et/ou récepteur (2),
- la plaque de base (1), l'élément émetteur et/ou récepteur (2) et l'élément de formation de faisceau (3) étant superposés de telle sorte qu'un intervalle (5) est présent entre la plaque de base (1) et l'élément de formation de faisceau (3) dans lequel se trouve l'élément émetteur et/ou récepteur (2), et
- les alimentations électriques étant disposées sur un élément support (4) fixé sur la plaque de base (1), qui s'étend au moins partiellement dans l'intervalle (5),
**caractérisé en ce que**
- l'intervalle (5) est limité par la plaque de base (1), l'élément de formation de faisceau (3) et au moins une paroi latérale, qui est formée par l'élément de formation de faisceau (3) ou un coupleur (8) pour le couplage d'un guide d'ondes, et par laquelle l'élément de formation de faisceau (3) ou le coupleur (8) est relié à la plaque de base (1), et
- l'élément support (4) avec les entrées de lignes électriques est relié de manière compacte à l'élément optique émetteur et/ou récepteur (2) et remplit ainsi partiellement une ouverture latérale que comprend l'intervalle (5).

2. Dispositif émetteur et/ou récepteur selon la revendication 1, **caractérisé en ce que** l'intervalle (5) est rempli au moins partiellement d'un matériau de scellement transparent (6) qui remplit complètement le trajet du faisceau optique à destination ou en provenance de l'élément émetteur et/ou récepteur.

3. Dispositif émetteur et/ou récepteur selon la revendication 1 ou 2, **caractérisé en ce que** la plaque de base (1) comprend des structures mécaniques (11) pour l'alignement mécanique et/ou optique des éléments disposés dessus.

4. Dispositif émetteur et/ou récepteur selon la revendication 3, **caractérisé en ce que** l'élément émetteur et/ou récepteur (2) est aligné par rapport aux structures mécaniques (11) de la plaque de base (1).

5. Dispositif émetteur et/ou récepteur selon la revendication 3 ou 4, **caractérisé en ce que** l'élément de formation de faisceau (3), sur le côté tourné vers la plaque de base (1), comprend des structures mécaniques (32) qui correspondent aux structures mécaniques (11) de la plaque de base et est fixé sur la plaque de base par l'intermédiaire de ces structures mécaniques.

6. Dispositif émetteur et/ou récepteur selon la revendication 5, **caractérisé en ce que** l'élément de formation de faisceau (3), sur le côté tourné vers la plaque de base, comprend un creux qui forme l'intervalle (5) entre la plaque de base (1) et l'élément de formation de faisceau et qui fournit au moins une limitation latérale de l'intervalle (5).

7. Dispositif émetteur et/ou récepteur selon au moins l'une des revendications précédentes, **caractérisé en ce que**, outre une première ouverture (51) de l'intervalle (5), il existe au moins une autre ouverture (101) qui est formée en particulier par un perçage dans la plaque de base (1) ou dans l'élément de formation de faisceau (3).

8. Dispositif émetteur et/ou récepteur selon au moins l'une des revendications précédentes, **caractérisé en ce que** l'élément support (4) est une pièce en céramique, sur la face supérieure de laquelle sont formées les entrées de lignes.

9. Dispositif émetteur et/ou récepteur selon au moins l'une des revendications précédentes, **caractérisé en ce que** l'élément de formation de faisceau (3'), sur le côté détourné de la plaque de base (1), forme des contours (34') pour le couplage d'un guide d'ondes optique (71, 72).

10. Dispositif émetteur et/ou récepteur selon au moins l'une des revendications 1 à 9, **caractérisé par** un coupleur (8, 8') pour le couplage d'un guide d'ondes optique qui est relié à la plaque de base (1), le coupleur (8, 8') comprenant au moins une ouverture latérale (81).

11. Dispositif émetteur et/ou récepteur selon la revendication 10, **caractérisé en ce que** le coupleur (8, 8'), sur le côté tourné vers la plaque de base (1), comprend un creux (84) dans lequel est disposé l'élément de formation de faisceau (3).

12. Dispositif émetteur et/ou récepteur selon la revendication 11, **caractérisé en ce que** l'élément de formation de faisceau (3") est fixé au coupleur (8') relié à la plaque de base (1).

13. Dispositif émetteur et/ou récepteur selon au moins l'une des revendications précédentes, **caractérisé en ce que**, dans l'intervalle (5) entre la plaque de base (1) et l'élément de formation de faisceau (3), sont disposés d'autres composants électroniques et/ou optoélectroniques (9).

14. Dispositif émetteur et/ou récepteur selon la revendication 13, dans lequel l'élément émetteur et/ou récepteur est un élément émetteur, **caractérisé en ce qu'**une diode de monitorage (22) est disposée sous l'élément émetteur (21).

15. Elément émetteur et/ou récepteur selon la revendication 13, dans lequel l'élément émetteur et/ou récepteur est un élément émetteur **caractérisé en ce que**, à l'intérieur de l'intervalle (5) et à côté de l'élément émetteur (21) est disposée une diode de monitorage (22).

16. Dispositif émetteur et/ou récepteur selon la revendication 15, **caractérisé en ce que** l'élément de formation de faisceau (3"') forme, au niveau de l'interface (35"') avec l'intervalle (5), une zone s'étendant de manière oblique (35a"'), de sorte qu'une partie du rayonnement émis par l'élément émetteur (21) est réfléchie sur la diode de monitorage disposée à côté de l'élément émetteur (22).

17. Dispositif émetteur et/ou récepteur selon la revendication 16, **caractérisé en ce qu'**une couche miroir à réflexion partielle est appliquée sur la zone s'étendant de manière oblique (35a"').

18. Elément émetteur et/ou récepteur selon au moins l'une des revendications précédentes, **caractérisé en ce que** la plaque de base (1) est une grille de connexion ou une partie d'une grille de connexion.

19. Elément émetteur et/ou récepteur selon la revendication 11 ou 12, **caractérisé en ce que** le coupleur (8') forme l'au moins une limitation latérale, l'ouverture latérale de l'intervalle étant formée par l'ouverture latérale du coupleur (8').
